# EUROPEAN PATENT SPECIFICATION

(11) **EP 4 557 876 B1**
(45) Date of publication and mention of the grant of the patent: **09.12.2026**
(21) Application number: 25162213.0
(22) Date of filing: 28.03.2019
(51) Int. Cl.: H04L 1/00, H04W 76/28

(54) **METHOD AND APPARATUS FOR FAST SERVING CELL ACTIVATION**
VERFAHREN UND VORRICHTUNG ZUR SCHNELLEN AKTIVIERUNG EINER VERSORGENDEN ZELLE
PROCÉDÉ ET APPAREIL D'ACTIVATION RAPIDE DE CELLULE DE DESSERTE

(43) Date of publication of application: 21.05.2025
(62) Document number(s) of the earlier application(s) in accordance with Art. 76 EPC: 19921505.4 / 3 949 588
(73) Proprietor: ZTE Corporation, Shenzhen, Guangdong 518057 (CN)
(72) Inventor: AI, Jianxun, Shenzhen (CN); HUANG, He, Shenzhen (CN); LIU, Jing, Shenzhen (CN); SHI, Xiaojuan, Shenzhen (CN); ZHANG, Nan, Shenzhen (CN); ZHANG, Mengjie, Shenzhen (CN)
(74) Representative: Vossius & Partner Patentanwälte Rechtsanwälte mbB

(56) References cited:
- EP-A1- 3 738 253
- EP-A1- 3 756 305
- WO-A1-2019/139769
- WO-A1-2019/225898
- QUALCOMM INCORPORATED: "Remaining issues on TRS", vol. RAN WG1, no. Athens, Greece; 20180226 - 20180302, 17 February 2018 (2018-02-17), XP051398244, Retrieved from the Internet <URL:http://www.3gpp.org/ftp/tsg%5Fran/WG1%5FRL1/TSGR1%5F92/Docs/> [retrieved on 20180217]
- MEDIATEK INC: "Summary for TRS", vol. RAN WG1, no. Athens, Greece; 20180226 - 20180302, 28 February 2018 (2018-02-28), XP051398510, Retrieved from the Internet <URL:http://www.3gpp.org/ftp/tsg%5Fran/WG1%5FRL1/TSGR1%5F92/Docs/> [retrieved on 20180228]
- MEDIATEK INC: "Summary #1 for TRS maintenance", vol. RAN WG1, no. Chengdu, China; 20181008 - 20181012, 9 October 2018 (2018-10-09), XP051519181, Retrieved from the Internet <URL:http://www.3gpp.org/ftp/tsg%5Fran/WG1%5FRL1/TSGR1%5F94b/Docs/R1%2D1811857%2Ezip> [retrieved on 20181009]
- MEDIATEK INC: "Summary #2 for TRS", vol. RAN WG1, no. Busan, Korea; 20180521 - 20180525, 24 May 2018 (2018-05-24), XP051442883, Retrieved from the Internet <URL:http://www.3gpp.org/ftp/Meetings%5F3GPP%5FSYNC/RAN1/Docs/> [retrieved on 20180524]

## Description

The present disclosure relates to the communication field, more particularly to methods and apparatuses for fast serving cell activation.

Mobile telecommunication technologies are moving the world towards an increasingly connected and networked society. In comparison with the existing wireless networks, next generation systems and wireless communication techniques will need to support a much wider range of use-case characteristics and provide a more complex and sophisticated range of access requirements and flexibility. Developing from LTE and LTE Advanced (LTE-A), the 5th generation of wireless system (5G) is required to support higher data-rates, large number of connections, ultra-low latency, high reliability and other emerging business needs.

3GPP draft R1-1802831 of 3GPP TSG RAN WG1 Meeting #92 in Athens, Greece, February 26th - March 2nd, 2018, by Qualcomm Incorporated, and titled "Remaining issues on TRS" discusses remaining open issues on TRS.

Dual Connectivity (DC) and Carrier Aggregation (CA) are introduced in the 3GPP Release 15 NR (new radio) standard (3GPP TS 38.331 VI 5.4.0) to boost data rates.

In Carrier Aggregation (CA). two or more serving cells are aggregated as a cell group (CG). A user equipment (UE) may simultaneously receive or transmit on one or multiple serving cells depending on its capabilities.

In Dual Connectivity (DC) operation, a UE in RRC_CONNECTED state is configured with two radio links to utilize radio resources provided by two distinct schedulers, located in two different base stations connected via a non-ideal backhaul and providing either E-UTRA, i.e. if the node is an ng-eNB, or NR access, i.e. if the node is a gNB.

Thus, a UE can be configured with a master cell group (MCG) and a secondary cell group (SCG).

A serving cell in a cell group can be a PCell (primary cell of MCG), PSCell (primary cell of SCG), and SCell (secondary cell). A SCell can be in an activated state, a deactivated state or a dormant state. A SCell can be transited to an activated state by a MAC CE (SCell activation MAC CE), or be configured as activated by a RRC message.

However, currently no prior art solutions provide method(s) for fast serving cell activation sufficient for the 5G standard. Thus, there is a need to provide methods and apparatuses with improved serving cell activation.

This document relates to methods, systems, and devices for fast serving cell activation.

The present invention is defined by the features of the independent claims. The dependent claims relate to preferred embodiments of the present invention.

### BRIEF DESCRIPTION OF THE DRAWINGS

FIG. 1 shows an example of a signaling chart illustrating a short period CSI report configuration according to the prior art;
FIG. 2 shows an example of a flow chart of a method for direct and active CSI report configuration;
FIG. 3 shows an example of a signaling chart of a method for applying CSI report configuration;
FIG. 4 shows an example of a signaling chart of a method for applying CSI report configuration;
FIG. 5 shows an example of a flow chart of a method for applying CSI report configuration according to Figs. 3 and 4;
FIG. 6 shows an example of a signaling chart of a method for stop applying CSI report configuration;
FIG. 7 shows an example of a flow chart of a method for stop applying CSI report configuration according to Fig. 6;
FIG. 8 shows an example of flow chart of a method for early measurement configuration;
FIG. 9 shows an example of flow chart of a method for configuration of a UE with individual measurement duration timers for performing early measurements;
FIG. 10 shows an example of flow chart of a method for time-frequency synchronization signaling in SCell activation encompassed by the invention; and

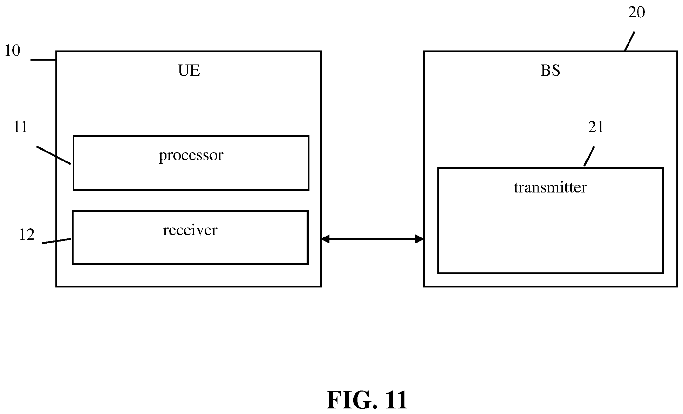

FIG. 11 shows an example of a schematic diagram illustrating the configuration of system including a UE and a BS.

### DETAILED DESCRIPTION

Embodiments of the present disclosure provide a mobile communication network (including but not limited to 5G network), the network structure of the network may include a network-side device (e.g., base station (BS) and a terminal (e.g., user equipment (UE) to be described in more detail below.

It will be understood by those skilled in the art that a CSI report, inter alia, comprises CQI. Thus, when referred to a CQI report it may relate to the CQI report comprised within the respective CSI report.

### Embodiment 1

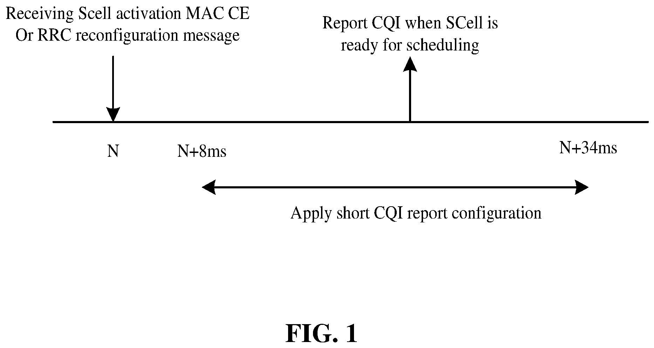

With reference to Fig. 1, a prior art method for a short period CQI report configuration can be configured to a UE as illustrated. The short period CQI report configuration has a shorter periodicity of uplink resources for CQI report than normal periodic CQI report configuration.

The UE applies the configured short period CQI report configuration when it activates a SCell after it receives a SCell activation MAC CE or a RRC reconfiguration message which configures a SCell in an activated state. The UE can speed up CQI reporting with this shorter period CQI reporting configuration, and the BS can start to schedule on the to be activated SCell with shorter delay after the BS indicates to the UE to activate a SCell.

The UE applies configured short period CQI reporting configuration during a predefined period of time, e.g. in LTE from n+8 (ms) to n+34 (ms), where n is the subframe where the SCell activation MAC CE is received, or the last subframe containing the RRC message which configures a SCell in an activated state.

In prior NR technology, four types of CSI reporting methods are defined. Namely, periodic CSI report on PUCCH, semi persistent CSI report on PUCCH, semi persistent CSI report on PUSCH, and aperiodic CSI report.

With periodic CSI report on PUCCH, the UE reports CSI measurement results on configured periodic PUCCH resources periodically. With semi persistent CSI report on PUCCH or PUSCH, the UE is configured with periodic CSI reporting resources which is activated or deactivated by a MAC CE (for semi persistent CSI report on PUCCH) or a DCI (for semi-persistent CSI report on PUSCH). The BS can also transmit a DCI to trigger an aperiodic CSI report.

Periodic CSI reporting is configured by a RRC message, and the UE applies periodic CSI report configuration when the corresponding serving cell is in an active state. In LTE, short period CQI reporting in the prior art is also a kind of periodic reporting method.

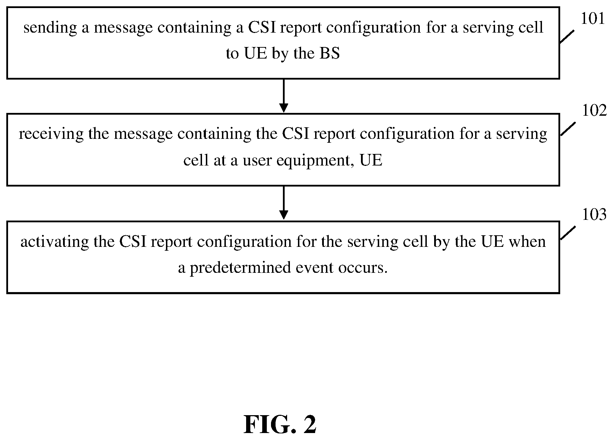

With reference to Fig. 2, the first embodiment of the present disclosure is described. Fig. 2 shows a signaling chart of a method for stop applying CSI report configuration.

At 101 the BS sends a message containing a CSI report configuration for a serving cell to the UE. At 102 the UE receives the message containing the CSI report configuration for a serving cell at the UE. At 103 the UE activates the CSI report configuration for the serving cell by the UE when a predetermined event occurs. The type of the CSI report configuration is semi-persistent reporting.

In more detail, the BS configures a first CSI report configuration for a serving cell via a RRC message to the UE. The BS differentiates the first CSI report configuration from other CSI report configuration by either including an explicit indicator for the first CSI report configuration, or by including an IE which value is the ID of the first CSI report configuration (CSI-ReportConfigId).

The UE activates the first CSI report configuration for the serving cell in following cases:
Case 1: The UE receives a MAC CE or DCI which activates a BWP for the serving cell.
Case 2: the UE wakes up according to DRX configuration for the serving cell or the cell group to which the serving cell belongs.
Case 3: the UE wakes up according to a wake up signal transmitted from the BS, which is used to indicate whether the UE should wake up according to the DRX configuration for the serving cell or the cell group to which the serving cell belongs.

The CSI report configuration further comprises reporting on PUCCH or PUSCH, and the UE activates the CSI report configuration automatically upon the cases listed above, without explicit MAC CE or DCI transmitted from the BS.

When the report configuration type semi-persistent report on PUCCH, time domain and frequency domain resource for CSI report on PUCCH is also configured in the RRC message.

When the report configuration type is semi-persistent report on PUCCH, a BWP ID is included in the RRC message. This BWP ID is used to indicate an uplink BWP which is associated with the PUCCH resources used for this CSI reporting.

When the report configuration type is semi-persistent report on PUSCH, time domain and frequency domain resource for CSI report on PUSCH are also configured in the RRC message.

Optionally, in the RRC message, the BS also indicates the time duration in which the semi persistent CSI report configuration is applied. The BS indicates the time duration by indicating the length of the time duration.

Optionally, in the RRC message, the BS also indicates the time point when UE starts to apply the fist CSI report configuration. For example, the indicated time point may be an offset value from when the RRC message is received.

Thus, according to the first embodiment of the present disclosure, it is not necessary to define a different set of short period CSI report configuration which is used to speed up CSI reporting during SCell activation and speed up CSI reporting after wake up from DRX sleep duration.

Instead, by employing existing CSI report configuration definition, this embodiment introduces in a RRC message an indicator to a CSI report configuration, or an IE to indicate which CSI report configuration should be activated/applied during activation procedure of the corresponding serving cell.

### Embodiment 2

With reference to Fig. 1 if a serving cell is configured as activated by a RRC message, the UE applies short period CQI report configuration from n+8 ms, where n is the last subframe containing the PDU of the RRC messages.

The problem of this approach is that it does not consider the time needed for RACH procedure which is triggered by the RRC message. If the RRC message triggers a handover (PCell change), or SN change (PSCell change), or SCG addition, a RACH procedure may be triggered to accomplish time alignment.

This situation may occur in following cases:
Case 1: the RRC message triggers a PCell or PSCell change. Then UE initiates RACH procedure on the new PCell or PSCell.
Case 2: the RRC message triggers a RACH-less handover. A number of uplink grant in the new PCell or PSCell are configured in the RRC message. The UE transmits an uplink signal using the configured uplink grant in the new PCell or SCell. The BS transmits a contention resolution identity MAC CE to the UE to confirm the RACH-less handover procedure is accomplished.

The problem is that the time used for the RACH procedure and the time used to finish RACH-less handover is uncertain. It could be long due to RACH collision or interference.

If the UE applies short period CSI or CQI report configuration based on the time when UE receives the RRC message, the UE may not have enough time to apply the short period CSI or CQI report configuration, because the RACH procedure or RACH-less procedure occupies the predefined time duration.

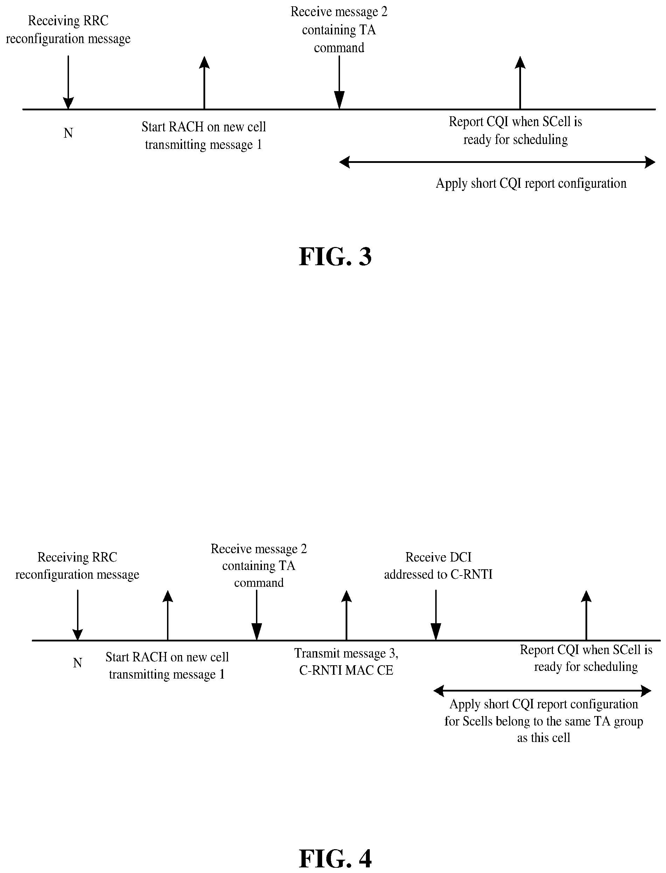

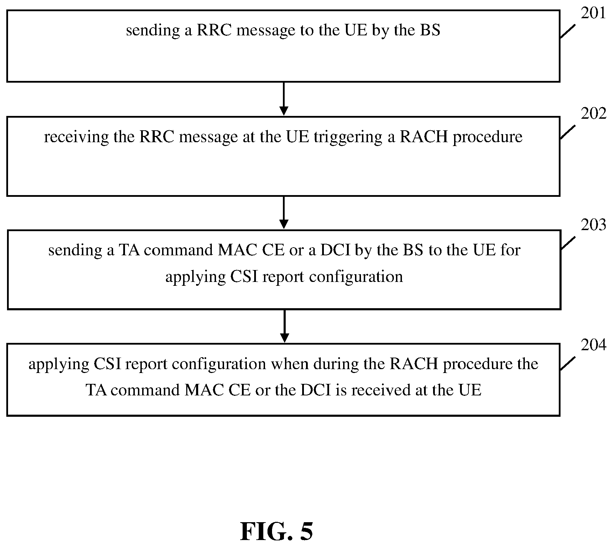

With reference to Figs. 3 to 5, the second embodiment of the present disclosure is described. FIG. 3 shows a signaling chart of a method for applying CSI report configuration according to a preferred embodiment of the present disclosure. FIG. 4 shows a signaling chart of a method for applying CSI report configuration according to another preferred embodiment of the present disclosure. FIG. 5 shows a flow chart of a method for applying CSI report configuration according to Figs. 3 and 4.

According to Fig. 5, at 201 the BS sends a RRC message to the UE. At 202 the UE receives the RRC message triggering a RACH procedure, e.g. a contention based RACH procedure or a contention free RACH. At 203 the BS sends a TA command MAC CE (Time Advance command) or a DCI which is addressed to the UE (i.e. the DCI is scrambled with C-RNTI allocated to the UE) At 204 the UE applies CSI report configuration upon reception of the TA command MAC CE or the DCI at the UE.

In more detail, the UE applies the configured short period CSI or CQI report configuration.

For the cases where contention based RACH procedure is triggered, including PCell change, PSCell change, SCG addition, UE performs one of following actions:
1. When a TA command MAC CE is received during the RACH procedure performed on a first serving cell, for the serving cells which belong to the same TA group as the first serving cell, the UE starts to apply short period CSI or CQI report configuration configured for these serving cells (cf. Fig. 3).
2. When a DCI addressed to the UE's C-RNTI allocated in a first serving cell is received, for the serving cells which belong to the same TA group as the first serving cell, the UE starts to apply short period CSI or CQI report configuration configured for these serving cells (cf. Fig. 4).

For cases where contention free RACH procedure is triggered, including PCell change, PSCell change, SCG addition, UE performs the following action. When a TA command MAC CE is received during RACH procedure performed on a first serving cell, for the serving cells which belong to the same TA group as the first serving cell, the UE starts to apply short period CSI or CQI report configuration configured for these serving cells (cf. Fig. 3).

Thus, according to the second embodiment of the present disclosure, the UE applies short period CSI or CQI report configuration from the time when a TA command MAC CE is received or contention resolution is accomplished. In comparison with the prior art, the second embodiment of the present disclosure avoids cases where the UE does not have enough time to apply short period CSI or CQI report configuration for serving cells due to uncertainty of RACH procedure delay.

### Embodiment 3

In the prior art, if a UE is configured with a short period CSI or CQI report configuration, it applies the short period CSI automatically for the corresponding serving cell within a period of time, i.e. n+8 ms to n+34 ms, where n is the subframe in which the MAC CE used to activate the serving cell, or the subframe which contains the last PDU of a RRC message the configure the serving cell as activated (cf. Fig. 1).

Although with a shorter CSI/CQI report periodicity, more UE power will be consumed, it may still be acceptable because the time duration the UE applies the short period CSI/CQI report configuration is not that long (26 ms).

However in NR, if applying this approach, the time duration in which the UE applies the short period CSI report configuration will be much longer. This is because more delay will be needed to activate a NR serving cell. The delay is used for UE to get ready for PDCCH monitoring, uplink transmission, perform CSI measurement, etc.

Further, this delay may vary dramatically for different frequency band, SMTC configuration of the serving cell and the timing relationship between the next occasion of SSB duration of the serving cell and the time when UE starts to activate the serving cell.

Thus, the prior art approach is no longer optimal regarding UE power consumption.

Actually, the UE applies short period CSI report configuration in order to report CSI as soon as possible when the serving cell to be activated is ready for scheduling and the BS can start to schedule on this serving cell according to the received CSI report. Thus, it is unnecessary to apply the short period CSI report configuration for a long time after the UE has already transmitted a CSI report and data scheduling has begun.

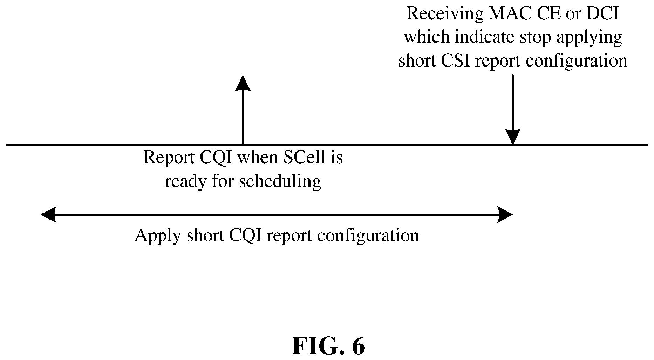

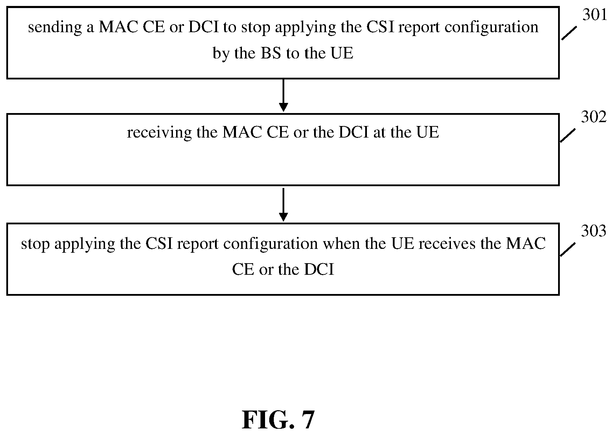

With reference to Figs. 6 and 7, the third embodiment of the present disclosure is described. FIG. 6 shows a signaling chart of a method for stop applying CSI report configuration according to a preferred embodiment of the present disclosure. FIG. 7 shows a flow chart of a method for stop applying CSI report configuration according to Fig. 6.

According to Fig. 7, at 301 the BS sends a MAC CE or DCI to stop applying the CSI report configuration to the UE. At 302 the UE receives the MAC CE or the DCI. At 303 the UE stops applying the CSI report configuration when the UE receives the MAC CE or the DCI.

In more detail, the third embodiment of the present disclosure aims to optimize the above mentioned drawbacks of the prior art by following methods.

The BS transmits a MAC CE or a DCI to indicate the UE to stop applying a first short period CSI report configuration or first short period CQI report configuration for a serving cell.

On reception of the MAC CE or DCI, the UE stops applying the first CSI report configuration or the first CQI report configuration.

The first short period CSI report configuration is configured for a NR serving cell. The first CSI report configuration can be periodic or semi-persistent report type.

The first short period CQI report configuration is configured for an E-UTRA or LTE serving cell. The first CQI report configuration can be periodic or semi-persistent report type.

The first CSI report configuration or the first CQI report configuration is applied by the UE during a SCell activation procedure, i.e. UE starts to apply the first CSI report configuration or CQI report configuration after it receives a SCell activation MAC CE or a RRC message which configures the SCell in an activated state.

Optionally, the first CSI report configuration or the first CQI report configuration is applied by the UE according to a predefined time duration during the SCell activation procedure.

Optionally, on reception of the MAC CE or DCI, the UE begins to apply a second CSI report configuration or a second CQI report configuration.

The second CSI report configuration or the second CQI report configuration may be periodic report type.

The BS transmits the MAC CE or DCI after it receives a valid CSI report for the serving cell to be activated.

Thus, according to the third embodiment of the present disclosure, the BS can stop applying short period CSI report configuration by explicit signaling. Therefore, unnecessary UE power consumption is saved when the SCell is already being scheduling.

### Embodiment 4

In the prior art, a UE can be configured with early measurement configuration when it is released to RRC IDLE state, or when it is suspended to RRC INACTIVE state. UE applies measurements according to configured early measurement configuration when it is in RRC IDLE or RRC INACTIVE state. When the UE is transited to RRC CONNECTED state, it reports the measurement results to the network node (base station, BS). The BS can configure radio resources according to the early measurement results to speed up the configuration.

A UE may be configured with CA or DC when it is in RRC CONNECTED state. When a UE is configured with CA, it is configured with a group serving cells which are aggregated as a cell group. A UE can be configured with DC which means it is configured with more than one cell groups, wherein one is called MCG and another is called SCG.

The early measurement configuration may contain the following information: at least one carrier frequency and at least one of the following parameters corresponding to the at least one carrier frequency: a carrier frequency information, an allowed measurement bandwidth, a measurement cell list, a validity area, frequency band information, a report quantity, and a quality threshold value.

The measurement cell list indicates a list of cells which the UE is requested to measure and report during an early measurement. In some embodiments, the report quantity indicates which measurement quantity the UE is requested to report in an early measurement report. In some embodiments, the quality threshold indicates a quality threshold for reporting an early measurement in a measurement cell. In some embodiments, the first message further comprises a duration for performing an early measurement.

When the UE is released to RRC IDLE state, or when is released to RRC INACTIVE state, it is highly likely that the UE will initiate RRC setup procedure or RRC resume procedure to transit to RRC CONNECTED state from the same location.

In the prior art, if BS wants to configure the UE to perform measurement on these serving cells, it can include the cell ID of these cells in the early measurement configuration which is configured to the UE.

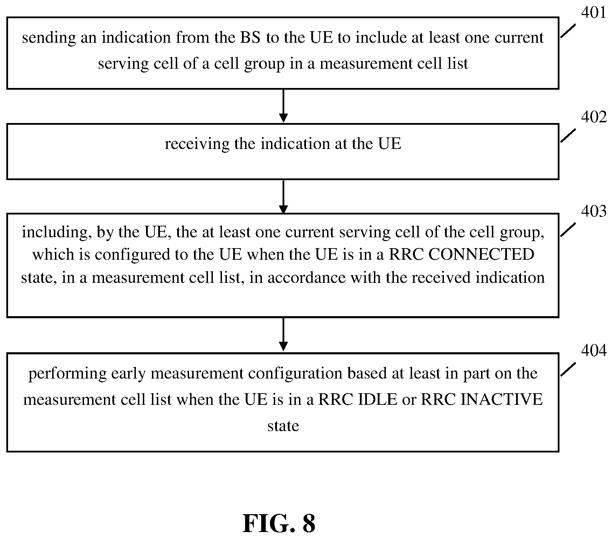

With reference to Figs. 8, the fourth embodiment of the present disclosure is described. FIG. 8 shows a flow chart of a method for early measurement configuration according to a preferred embodiment of the present disclosure.

According to Fig. 8, at 401 the BS sends an indication to the UE to include at least one current serving cell of a cell group, e.g. a MCG and/or SCG, in a measurement cell list. At 402 the UE receives the indication. At 403 the UE includes of the at least one current serving cell of the cell group, which is configured to the UE when the UE is in a RRC CONNECTED state, in a measurement cell list, in accordance with the received indication. At 404 the UE performs early measurement configuration based at least in part on the measurement cell list when the UE is in a RRC IDLE or RRC INACTIVE state.

Thus, according to the fourth embodiment of the present disclosure, it is beneficial to let UE perform early measurement on the serving cell(s) which is/are configured to the UE when it is in RRC CONNECTED state. When UE is transited to RRC CONNECTED state, it can report the measurement results on these serving cell(s) as soon as possible.

In more detail, the UE includes all or part of serving cells of MCG and/or SCG which are configured to the UE when it is in RRC CONNECTED and before it is transited to RRC IDLE or RRC INACTIVE state as part of the measurement cell list. UE does so according to BS indication or according to predefined rules specified in protocol.

The BS indicates the UE to do so by at least one of following:
1. including indicator in RRC message which is used to release UE to RRC IDLE state or suspend UE to RRC INACTIVE state;
2. including indicator in system information transmitted in the serving cell which UE camps on.

Said indication can be defined as one of following:
3. to include serving cells of MCG as part of measurement cell list of early measurement;
4. to include serving cells of SCG as part of measurement cell list of early measurement;
5. to include serving cells of both MCG and SCG as part of measurement cell list of early measurement;
6. to include serving cells of a specific RAT type, e.g. NR serving cell, or E-UTRA serving cell.

Further, the serving cells which are to be included as part of the measurement cell list may meet at least one of following conditions:
7. the serving cell is in an activated state when the UE receives RRC release message which transit UE to RRC IDLE or RRC INACTIVE state;
8. the serving cell is in dormant state when the UE receives RRC release message which transit UE to RRC IDLE or RRC INACTIVE state;
9. the serving cell is in deactivated state when the UE receives RRC release message which transit UE to RRC IDLE or RRC INACTIVE state;
10. the serving cell is in any state when the UE receives RRC release message which transit UE to RRC IDLE or RRC INACTIVE state;
11. the carrier frequency of the serving cell is configured as a carrier frequency for early measurement. This means those serving cells whose carrier frequency is not included in the early measurement configuration according to the fourth embodiment will not be included as part of a measurement cell list.

The UE includes all or part of its serving cells configured in RRC CONNECTED state in the early measurement configuration, performs early measurement on these cells, and report measurement results for these cells.

The UE includes a serving cell in the measurement cell list of the carrier frequency on which the serving cell is located, or in the measurement cell list of the frequency band on which the serving cell is located. For example, a serving cell is located on carrier frequency f1, then UE includes the serving cell in the measurement cell list configured for the carrier frequency f1.

Thus, according to the fourth embodiment of the present disclosure, signaling overhead is saved if compared to the prior art.

In particular, in the prior art, explicit signaling is needed to configure cell ID of a serving cell in the early measurement configuration carried in the RRC message which is transmitted from BS to UE. In contrast, according to the fourth embodiment of the present disclosure, only one or a few bits are needed to indicate whether UE includes the configured serving cells as part of early measurement.

Since the number of serving cells that can be configured to a UE may be high, the saved signaling size can be significant by employing the solution according to the fourth embodiment of the present disclosure.

### Embodiment 5

In the prior art, when a UE is configured to perform early measurement in RRC IDLE state, the UE is configured with a measurement duration timer parameter which is called *measIdleDuration.* That is, UE starts a timer called T331 according to said parameter when it receives a RRC release message, which configures the UE with early measurement configuration. Before this timer expires, the UE performs measurements according to the configured early measurement configuration.

To support fast MR-DC configuration, the early measurement configuration may contain measurement configuration for more than one RAT types. For example, when a UE is released to RRC IDLE state from a NR cell, it may be configured with early measurement configuration for a list of NR frequency, and a list of E-UTRA frequency. Then when UE is RRC IDLE and before configured measurement duration timer (T331) expires, the UE performs early measurements on both NR frequencies and E-UTRA frequencies. When this measurement duration timer expires, the UE may stop performing measurements and discards the measurement results.

For NR frequencies referred to in the present disclosure see 3GPP TS 38.101 version 15.3.0 Release 15 or the latest version thereof. For E-UTRA frequencies referred to in the present disclosure see 3GPP TS 36.101 version 15.4.0 Release 15 or the latest version thereof.

According to the prior art, the UE performs early measurements for intra-RAT frequency and inter-RAT frequency with the same time duration length. This is not beneficial for UE power consumption. To perform inter-RAT measurement, the UE will adjust its receiver. This extra action will increase complexity and cause more power consumption than intra-RAT measurements.

In the prior art, the same problem exists for inter-frequency measurements. When UE is configured with multiple frequencies to perform early measurements, it performs measurements for these frequencies within the same time duration although inter-frequency measurements are much more power consuming than intra-frequency measurements.

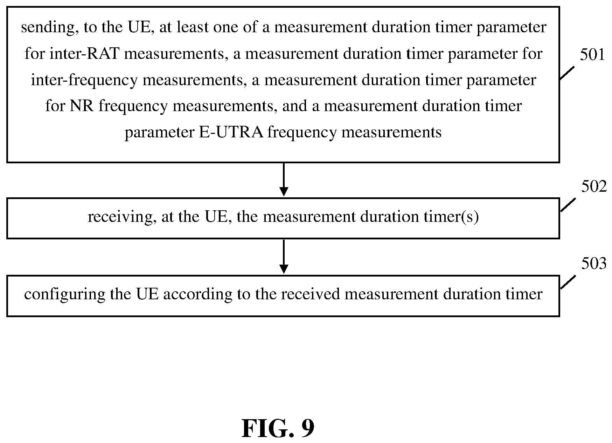

With reference to Fig. 9, the fifth embodiment of the present disclosure is described. FIG. 9 shows a flow chart of a method for configuration of a UE with individual measurement duration timers for performing early measurements according to a preferred embodiment of the present disclosure.

According to Fig. 9, at 501 the BS sends, to the UE, at least one of a measurement duration timer parameter for inter-RAT measurements, a measurement duration timer parameter for inter-frequency measurements, a measurement duration timer parameter for NR frequency measurements, and a measurement duration timer parameter for E-UTRA frequency measurements. At 502 the UE receives the measurement duration timer parameter(s). At 503 the UE configures itself according to the received measurement duration timer parameter(s).

According to the fifth embodiment of the present disclosure, the aforementioned measurement duration timer parameters may be set individually.

In more detail, separate early measurement duration parameters are defined to implement a finer granularity control on UE behavior.

According to embodiments of the present disclosure, UE may be configured by BS with an early measurement duration parameter for inter-RAT measurement. UE starts a timer whose length is set according to this parameter. When this timer is running, UE performs early measurement on the configured frequencies whose RAT type is different to the RAT type of UE's current serving cell.

According to embodiments of the present disclosure, UE may be configured by BS with an early measurement duration parameter for inter-frequency measurement. UE starts a timer whose length is set according to this parameter. When this timer is running, UE performs early measurement on inter-frequency frequencies (the frequency which is of different frequency to that of UE's current serving cell).

According to embodiments of the present disclosure, UE may be configured by BS with early measurement duration parameters for NR frequency and E-UTRA frequency, respectively. UE starts timers whose lengths are set according to these parameters, respectively. When a timer is running, UE performs early measurement on the configured frequencies whose RAT type is the same as the RAT type associated with the timer. For example, when measurement duration timer for NR frequency is running, UE performs early measurement on NR frequencies.

Thus, according to the fifth embodiment of the present disclosure, the BS can control UE behavior of early measurement with fine granularity. To configure different measurement duration timer lengths can optimize power consumption of the UE

### Embodiment 6

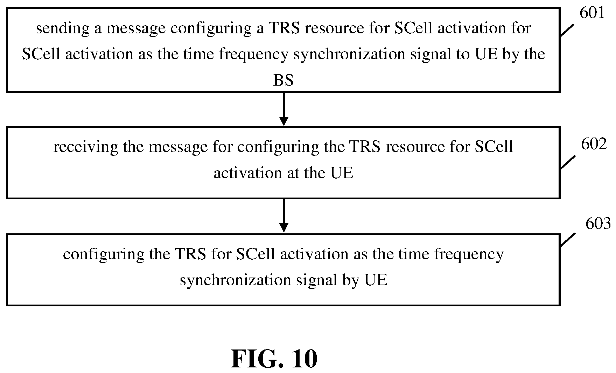

With reference to Fig. 10, the sixth embodiment of the present disclosure is described and encompasses the invention.

FIG. 10 shows an example of flow chart of a method for time-frequency synchronization signaling in SCell activation according to a preferred embodiment of the present disclosure.

According to Fig. 10, at 601 the BS sends, to the UE, a message configuring a tracking reference signal, TRS, resource for SCell activation for configuring TRS for SCell activation as the time frequency synchronization signal. At 602 the UE receives the message for configuring the TRS resource for SCell activation. At 603 the UE configures the TRS for SCell activation as the time frequency synchronization signal.

In 3GPP NR system, TRS refers to CSI-RS for tracking, which is configured by higher layer UE specific configuration of a *NZP-CSI-RS-ResourceSet* configured with higher layer parameter *trs-Info.*

In more detail, the time-frequency synchronization delay is the main factor affecting SCell activation delay. So reducing the delay for acquiring time-frequency synchronization can significantly reduce the SCell activation delay. Except for SSB, TRS can be configured for each SCell as the time-frequency synchronization signal to acquire faster time-frequency synchronization. There are three alternatives to do so, of which Alt. 3 is relevant to the invention:
Alt. 1: Periodic TRS resource for SCell can be configured via RRC reconfiguration message. When the UE receives MAC CE or RRC signaling for SCell activation, the UE can detect the TRS according to configured offset and periodicity, similar to the process for SSB detection. The BS transmits TRS according to the configured offset and periodicity.

Upon receiving SCell activation command in slot n, the SCell shall be activated no later than in slot n+TTRS+Tothers. TTRS is the time to acquire TRS. The maximum of TTRS is a periodicity of TRS resource. Tothers is the time for other processes related to SCell activation, including HARQ processing or RRC processing time, CSI report processing time, RF re-tuning time, L2 parsing time, AGC adjustment time, and so on.

Alt. 2: Semi-persistent TRS resource for SCell can be configured via RRC reconfiguration message. When the MAC CE is used to activate SCell, the semi-persistent TRS can be triggered via MAC CE or a DCI as well. When the RRC signaling is used to activate SCell, the semi-persistent TRS can be triggered by DCI with receiving RRC signaling, or be triggered by the RRC signaling which indicates the UE to activate configure semi-persistent TRS resource. Then the UE can detect the semi-persistent TRS in slot n1+X, if the TRS is triggered in slot n1. X is the offset according to configuration by RRC message (indicated in periodicityAndOffset), or defined by protocol, which can be considered as TTRS. So upon receiving SCell activation command in slot n, the SCell shall be activated in slot n+X+Tothers.

Alt. 3: According to the invention, aperiodic TRS resource for SCell can be configured via RRC reconfiguration message. When the RRC signaling is used to activate SCell, the aperiodic TRS can be triggered by DCI with the RRC signaling. When the MAC CE is used to activate SCell, the aperiodic TRS can be triggered by DCI through cross-carrier scheduling, or a MAC CE. Then the UE can detect the aperiodic TRS in slot n1+X, if the TRS is triggered in slot n1. X is the offset configured by RRC message (indicated in aperiodicTriggeringOffset), or defined by protocol, which can be considered as TTRS. Upon receiving SCell activation command in slot n, the SCell shall be activated in slot n+K+X+Tothers. K is the timing for cross-carrier scheduling.

In all alternatives, the BS transmits TRS with a power which has a fix relationship with the power used for transmitting SSB or PDCCH in the same cell or in the same BWP.

Optionally, the BS indicates the transmission power of the TRS to the UE, by indicating the power value, or the power offset to the transmission of SSB or PDCCH of the same cell or same beam.

It will be appreciated by the skilled person that early measurement configuration may also be called idle measurement configuration or inactive measurement configuration.

With reference to Fig. 10, a system in accordance with the present disclosure is illustrated. In particular Fig. 10 shows a schematic diagram illustrating the configuration of a system including a UE 10 and a BS 20 according to embodiments of the present disclosure.

The UE 10 comprises a processor 11 and a receiver 12.

The processor 11 may implement any one of the foregoing described steps of the first to fifth embodiments on the UE 10.

The receiver 12 may receive any of the foregoing described signals of the first to fifth embodiments at the UE 10.

The BS 20 comprises a transmitter, which may transmit any of the foregoing described signals of the first to fifth embodiments from the BS 20.

Thus, the system as illustrated in Fig. 10 may implement any of the foregoing described methods according to the preferred embodiments 1 to 5.

### Embodiment 7

When receiving a MAC CE or a RRC reconfiguration message for SCell activation, the UE uses reference SCells' SSB, CSI-RS, or TRS (CSI-RS for tracking) for time-frequency synchronization or AGC adjustment for this SCell.

Optionally, the antenna ports of the SCell to be activated and the reference cell are quasi co-location.

The BS configures reference information for a SCell via a RRC reconfiguration message. The reference information is used to help UE to detect SSB CSI-RS, or TRS in a reference cell for the SCell to be activated.

The reference information includes at least one of following parameters:
- the reference serving cell's cell ID, or the reference cell's index;
- the SSB index mapping between the reference cell and the SCell to be activated to indicate the relationship between the reference SSB index and SSB index for the SCell to be activated;
- the CSI-RS index mapping between the reference cell and the SCell to be activated to indicate the relationship between the reference CSI-RS index and CSI-RS index for the SCell to be activated;
- the TRS index mapping between the reference cell and the SCell to be activated to indicate the relationship between the reference TRS index and TRS index for the SCell to be activated;
- the cell-level power offset between the reference SCell and the SCell to be activated;
- the power offset for SSB beam between the reference SCell and the SCell to be activated;
- the power offset for CSI-RS beam between the reference SCell and the SCell to be activated; and
- the power offset for TRS beam between the reference TRS and the SCell to be activated.

The UE performs time-frequency synchronization by perform the following steps:
- receiving the RRC reconfiguration message including reference information; and
- upon receiving MAC CE or RRC reconfiguration message for SCell activation, detecting the SSB/CSI-RS/TRS in a reference cell according to the reference cell index and SSB/CSI-RS/TRS index mapping between the reference cell and the SCell to be activated.

The UE performs AGC adjustment by perform following steps:
- receiving the RRC reconfiguration message including reference information; and
- upon receiving MAC CE or RRC reconfiguration message for SCell activation, performing the AGC adjustment according to the received cell-level power offset or power offset for SSB/CSI-RS/TRS beam between the reference SCell and the SCell to be activated.

With this embodiment, the UE can use reference signals transmitted in another serving cell to accomplish time-frequency synchronization, or AGC adjustment. This is beneficial in reduction of SCell activation. To activate a SCell, UE has to accomplish time-frequency synchronization and AGC before activating PDCCH monitoring on the SCell to be activate. In prior art, UE performs these functions by reading SSB or other references transmitted on the SCell to be activated. If the period of these reference signals is too long, the SCell activation delay will be large accordingly.

If UE can read reference signals transmitted on other serving cells, the delay may be reduced because UE has more frequency reference signals for time-frequency synchronization and AGC adjustment in effect.

Those skilled in the art will appreciate that the present disclosure is not limited by the description of steps executed by the BS and steps executed by the UE. Rather, both the UE and the BS can be provided as separate units or in combination with each other as a system.

Those skilled in the art will appreciate that all or a portion of the steps described above can be implemented with a program to instruct a related hardware, the program being stored in a computer-readable storage medium such as a read-only memory, a magnetic disk, or an optical disk. In some embodiments, all or part of the steps of the foregoing embodiments may also be implemented by using one or more integrated circuits. Accordingly, each module/unit in the foregoing embodiment may be implemented in the form of hardware or may be implemented in software. The invention is not limited to any specific form of combination of hardware and software.

It is to be understood that various modifications and improvements can be made to the present invention without departing from the scope of the invention. Corresponding changes and modifications are intended to be included within the scope of the appended claims.

Through the description of the above embodiments, those skilled in the art can clearly understand that the method according to the above embodiment can be implemented by means of software plus a necessary general hardware platform, and of course, can also be through hardware, but in many cases the former is a better implementation. Based on such understanding, the technical solution of the present invention, which is essential or contributes to the prior art, may be embodied in the form of a software product stored in a storage medium (such as ROM/RAM, disk, the optical disc), and may include a number of instructions for causing a terminal device (which may be a cell phone, a computer, a server, or a network device, etc.) to perform the methods described in various embodiments of the present invention.

It will be apparent to those skilled in the art that the various modules or steps of the present invention described above can be implemented by a general-purpose computing device, which can be centralized on a single computing device or distributed across a network of multiple computing devices. In some embodiments, they may be implemented in program code executable by a computing device such that they may be stored in a storage device for execution by the computing device and, in some cases, may differ from this. The steps shown or described are performed sequentially, or they are separately fabricated into individual integrated circuit modules, or a plurality of modules or steps thereof are fabricated as a single integrated circuit module. Thus, the invention is not limited to any specific combination of hardware and software.

## Claims

1. A method for time-frequency synchronization signaling in SCell activation, comprising:
receiving (602), by a user equipment (10), a message, sent by a base station (20), for configuring a tracking reference signal, TRS, resource for secondary cell, SCell, activation for configuring a TRS for SCell activation as the time-frequency synchronization signal; and
configuring (603), by the user equipment, the TRS for SCell activation as the time-frequency synchronization signal,
wherein the TRS resource is an aperiodic TRS resource, and
wherein the SCell is activated by a media access control, MAC, control element, CE, and the aperiodic TRS is triggered by a MAC CE, **characterised in that** the aperiodic TRS is triggered in slot n1 and the aperiodic TRS is detected, by the user equipment, in slot n1+X, wherein X is an offset configured by a radio resource control, RRC, message or defined by a protocol.

2. The method according to claim 1, further comprising:
detecting, by the user equipment (10), the aperiodic TRS with a transmission power which has a fix relationship with a transmission power used for transmitting a synchronization signal block, SSB, in the same cell.

3. The method according to claim 1 or 2, further comprising:
receiving, by the user equipment (10) and from base station (20), an indication of a transmission power of the aperiodic TRS, wherein the indication comprises a power value or a power offset to a transmission of a SSB in the same cell.

4. A method for time-frequency synchronization signaling in secondary cell, SCell activation, comprising:
sending, by a base station (20), (601) a message, to a user equipment (10), configuring a tracking reference signal, TRS, resource for SCell activation for configuring a TRS for SCell activation as the time-frequency synchronization signal,
wherein the TRS resource is an aperiodic TRS resource, and
wherein the SCell is activated by a media access control, MAC, control element, CE, and the aperiodic TRS is triggered by a MAC CE, **characterised in that** the aperiodic TRS is triggered in slot n1 and the aperiodic TRS is transmitted, by the base station, in slot n1+X, wherein X is an offset configured by a RRC message or defined by a protocol.

5. The method according to claim 4, further comprising:
transmitting the aperiodic TRS with a transmission power which has a fix relationship with a transmission power used for transmitting a synchronization signal block SSB, in the same cell.

6. The method according to claims 4 or 5, further comprising:
indicating a transmission power of the aperiodic TRS, wherein the indication comprises a power value or a power offset to a transmission of a SSB in the same cell.

7. A user equipment apparatus (10) comprising a processor (11) and a receiver (12), wherein:
the receiver (12) is configured to receive, from a base station (20), a message for configuring a tracking reference signal, TRS, resource for secondary cell, SCell, activation for configuring a TRS for SCell activation as the time-frequency synchronization signal, and
the processor (11) is configured to configure the TRS for SCell activation as the time-frequency synchronization signal,
the TRS resource is an aperiodic TRS resource, and
the SCell is activated by a media access control, MAC, control element CE, and the aperiodic TRS is triggered by a MAC CE, **characterised in that** the aperiodic TRS is triggered in slot n1 and the aperiodic TRS is detected, by the user equipment, in slot n1+X, wherein X is an offset configured by a radio resource control, RRC, message or defined by a protocol.

8. The user equipment apparatus (10) according to claim 7, wherein the receiver (12) is further configured to detect the aperiodic TRS with a transmission power which has a fix relationship with a transmission power used for transmitting a synchronization signal block, SSB, in the same cell.

9. The user equipment apparatus (10) according to claims 7 or 8, wherein the receiver (12) is further configured to receive an indication of a transmission power of the aperiodic TRS, wherein the indication comprises a power value or a power offset to a transmission of a SSB in the same cell.

10. A base station apparatus (20) comprising a transmitter (21), wherein the transmitter (21) is configured to send a message, to a user equipment (10), configuring a tracking reference signal, TRS, resource for secondary cell, SCell, activation for configuring a TRS for SCell activation as the time-frequency synchronization signal, wherein the TRS resource is an aperiodic TRS resource, and wherein the SCell is activated by a media access control, MAC, control element, CE, and the aperiodic TRS is triggered by a MAC CE, **characterised in that** the aperiodic TRS is triggered in slot n1 and the aperiodic TRS is transmitted, by the base station, in slot n1+X, wherein X is an offset configured by a radio resource control, RRC, message or defined by a protocol.

11. The base station apparatus (20) according to claim 10, wherein the transmitter (21) is further configured to transmit the aperiodic TRS with a transmission power which has a fix relationship with a transmission power used for transmitting a synchronization signal block, SSB, in the same cell, and/or
wherein the transmitter (21) is further configured to indicate a transmission power of the aperiodic TRS, wherein the indication comprises a power value or a power offset to a transmission of a SSB in the same cell.

## Patentansprüche

1. Verfahren für eine Zeit-Frequenz-Synchronisationssignalisierung bei einer SCell-Aktivierung, umfassend:
Empfangen (602), durch ein Benutzergerät (10), einer Nachricht, gesendet durch eine Basisstation (20), zum Konfigurieren einer Tracking-Referenzsignalressource, TRS-Ressource, zur Sekundärzellenaktivierung, SCell-Aktivierung, zum Konfigurieren eines TRS zur SCell-Aktivierung als das Zeit-Frequenz-Synchronisationssignal; und
Konfigurieren (603), durch das Benutzergerät, des TRS für die SCell-Aktivierung als das Zeit-Frequenz-Synchronisationssignal,
wobei die TRS-Ressource eine aperiodische TRS-Ressource ist, und
wobei die SCell durch ein Media-Access-Control-Steuerelement, MAC CE, aktiviert wird und das aperiodische TRS durch ein MAC CE ausgelöst wird,
**dadurch gekennzeichnet, dass** das aperiodische TRS in Slot n1 ausgelöst wird und das aperiodische TRS durch das Benutzergerät in Slot n1+X detektiert wird, wobei X ein Offset ist, der durch eine Radio-Resource-Control-Nachricht, RRC-Nachricht, konfiguriert oder durch ein Protokoll definiert ist.

2. Verfahren nach Anspruch 1, ferner umfassend:
Detektieren, durch das Benutzergerät (10), des aperiodischen TRS mit einer Übermittlungsleistung, die eine feste Beziehung zu einer Übermittlungsleistung hat, die zum Übermitteln eines Synchronisationssignalblocks, SSB, in derselben Zelle verwendet wird.

3. Verfahren nach Anspruch 1 oder 2, ferner umfassend:
Empfangen, durch das Benutzergerät (10) und von der Basisstation (20), einer Angabe einer Übermittlungsleistung des aperiodischen TRS, wobei die Angabe einen Leistungswert oder einen Leistungs-Offset zu einer Übermittlung eines SSB in derselben Zelle aufweist.

4. Verfahren für die Zeit-Frequenz-Synchronisationssignalisierung bei der Sekundärzellenaktivierung, SCell-Aktivierung, umfassend:
Senden, durch eine Basisstation (20), (601) einer Nachricht an ein Benutzergerät (10), die eine Tracking-Referenzsignalressource, TRS-Ressource, für die SCell-Aktivierung konfiguriert, zum Konfigurieren eines TRS für die SCell-Aktivierung als das Zeit-Frequenz-Synchronisationssignal,
wobei die TRS-Ressource eine aperiodische TRS-Ressource ist, und
wobei die SCell durch ein Media-Access-Control-Steuerelement, MAC CE, aktiviert wird und das aperiodische TRS durch ein MAC CE ausgelöst wird,
**dadurch gekennzeichnet, dass** das aperiodische TRS in Slot n1 ausgelöst wird und das aperiodische TRS durch die Basisstation in Slot n1+X übermittelt wird, wobei X ein Offset ist, der durch eine RRC-Nachricht konfiguriert oder durch ein Protokoll definiert ist.

5. Verfahren nach Anspruch 4, ferner umfassend:
Übermitteln des aperiodischen TRS mit einer Übermittlungsleistung, die eine feste Beziehung zu einer Übermittlungsleistung vorweist, die zum Übermitteln eines Synchronisationssignalblocks, SSB, in derselben Zelle verwendet wird.

6. Verfahren nach den Ansprüchen 4 oder 5, ferner umfassend:
Angeben einer Übermittlungsleistung des aperiodischen TRS, wobei die Angabe einen Leistungswert oder einen Leistungs-Offset zu einer Übermittlung eines SSB in derselben Zelle aufweist.

7. Benutzergerätevorrichtung (10), umfassend einen Prozessor (11) und einen Empfänger (12), wobei:
der Empfänger (12) konfiguriert ist, um von einer Basisstation (20) eine Nachricht zum Konfigurieren einer Tracking-Referenzsignalressource, TRS-Ressource, für die Sekundärzellenaktivierung, SCell-Aktivierung, zum Konfigurieren eines TRS für die SCell-Aktivierung als das Zeit-Frequenz-Synchronisationssignal zu empfangen, und
der Prozessor (11) konfiguriert ist, um das TRS für die SCell-Aktivierung als das Zeit-Frequenz-Synchronisationssignal zu konfigurieren,
die TRS-Ressource eine aperiodische TRS-Ressource ist, und
die SCell durch ein Media-Access-Control-Steuerelement, MAC CE, aktiviert wird und das aperiodische TRS durch ein MAC-CE ausgelöst wird,
**dadurch gekennzeichnet, dass** das aperiodische TRS in Slot n1 ausgelöst wird und das aperiodische TRS durch das Benutzergerät in Slot n1+X detektiert wird, wobei X ein Offset ist, der durch eine Radio-Resource-Control-Nachricht, RRC-Nachricht, konfiguriert oder durch ein Protokoll definiert ist.

8. Benutzergerätevorrichtung (10) nach Anspruch 7, wobei der Empfänger (12) ferner konfiguriert ist, um das aperiodische TRS mit einer Übermittlungsleistung zu detektieren, die eine feste Beziehung zu einer Übermittlungsleistung vorweist, die zum Übermitteln eines Synchronisationssignalblocks, SSB, in derselben Zelle verwendet wird.

9. Benutzergerätevorrichtung (10) nach Anspruch 7 oder 8, wobei der Empfänger (12) ferner konfiguriert ist, um eine Angabe einer Übermittlungsleistung des aperiodischen TRS zu empfangen, wobei die Angabe einen Leistungswert oder einen Leistungs-Offset zu einer Übermittlung eines SSB in derselben Zelle aufweist.

10. Basisstationsvorrichtung (20), umfassend einen Übermittler (21), wobei der Übermittler (21) konfiguriert ist, um eine Nachricht an ein Benutzergerät (10) zu senden, die eine Tracking-Referenzsignalressource, TRS-Ressource, für die Sekundärzellenaktivierung, SCell-Aktivierung, konfiguriert, zum Konfigurieren eines TRS für die SCell-Aktivierung als das Zeit-Frequenz-Synchronisationssignal, wobei die TRS-Ressource eine aperiodische TRS-Ressource ist, und wobei die SCell durch ein Media-Access-Control-Steuerelement, MAC-CE, aktiviert wird und das aperiodische TRS durch ein MAC-CE ausgelöst wird,
**dadurch gekennzeichnet, dass** das aperiodische TRS in Slot n1 ausgelöst wird und das aperiodische TRS durch die Basisstation in Slot n1+X übermittelt wird, wobei X ein Offset ist, der durch eine Radio-Resource-Control-Nachricht, RRC-Nachricht, konfiguriert oder durch ein Protokoll definiert ist.

11. Basisstationsvorrichtung (20) nach Anspruch 10, wobei der Übermittler (21) ferner konfiguriert ist, um das aperiodische TRS mit einer Übermittlungsleistung zu übermitteln, die eine feste Beziehung zu einer Übermittlungsleistung vorweist, die zum Übermitteln eines Synchronisationssignalblocks, SSB, in derselben Zelle verwendet wird, und/oder
wobei der Übermittler (21) ferner konfiguriert ist, eine Übermittlungsleistung des aperiodischen TRS anzugeben, wobei die Angabe einen Leistungswert oder einen Leistungs-Offset zu einer Übermittlung eines SSB in derselben Zelle aufweist.

## Revendications

1. Procédé de signalisation de synchronisation temps-fréquence lors d'une activation de SCell, comprenant :
la réception (602), par un équipement utilisateur (10), d'un message, envoyé par une station de base (20), pour configurer une ressource de signal de référence de suivi, TRS, pour une activation de cellule secondaire, SCell, afin de configurer un TRS pour une activation de SCell en tant que signal de synchronisation temps-fréquence ; et
la configuration (603), par l'équipement utilisateur, du TRS pour une activation de SCell en tant que signal de synchronisation temps-fréquence,
dans lequel la ressource TRS est une ressource TRS apériodique, et
dans lequel la SCell est activée par un élément de commande, CE, de commande d'accès au support, MAC, et le TRS apériodique est déclenché par un CE MAC,
**caractérisé en ce que** le TRS apériodique est déclenché dans un créneau n1 et le TRS apériodique est détecté, par l'équipement utilisateur, dans un créneau n1 + X, dans lequel X est un décalage configuré par un message de commande de ressources radio, RRC, ou défini par un protocole.

2. Procédé selon la revendication 1, comprenant en outre :
la détection, par l'équipement utilisateur (10), du TRS apériodique avec une puissance de transmission qui présente une relation fixe avec une puissance de transmission utilisée pour transmettre un bloc de signal de synchronisation, SSB, dans la même cellule.

3. Procédé selon la revendication 1 ou 2, comprenant en outre :
la réception, par l'équipement utilisateur (10) et en provenance d'une station de base (20), d'une indication d'une puissance de transmission du TRS apériodique, dans lequel l'indication comprend une valeur de puissance ou un décalage de puissance par rapport à une transmission d'un SSB dans la même cellule.

4. Procédé de signalisation de synchronisation temps-fréquence lors d'une activation de cellule secondaire, SCell, comprenant :
l'envoi, par une station de base (20), (601) d'un message, à un équipement utilisateur (10), configurant une ressource de signal de référence de suivi, TRS, pour une activation de SCell pour configurer un TRS pour une activation de SCell en tant que signal de synchronisation temps-fréquence,
dans lequel la ressource TRS est une ressource TRS apériodique, et
dans lequel la SCell est activée par un élément de commande, CE, de commande d'accès au support, MAC, et le TRS apériodique est déclenché par un CE MAC,
**caractérisé en ce que** le TRS apériodique est déclenché dans un créneau n1 et le TRS apériodique est transmis, par la station de base, dans un créneau n1 + X, dans lequel X est un décalage configuré par un message RRC ou défini par un protocole.

5. Procédé selon la revendication 4, comprenant en outre :
la transmission du TRS apériodique avec une puissance de transmission qui présente une relation fixe avec une puissance de transmission utilisée pour transmettre un bloc de signal de synchronisation SSB, dans la même cellule.

6. Procédé selon la revendication 4 ou 5, comprenant en outre :
l'indication d'une puissance de transmission du TRS apériodique, dans lequel l'indication comprend une valeur de puissance ou un décalage de puissance par rapport à une transmission d'un SSB dans la même cellule.

7. Appareil d'équipement utilisateur (10) comprenant un processeur (11) et un récepteur (12), dans lequel :
le récepteur (12) est configuré pour recevoir, en provenance d'une station de base (20), un message pour configurer une ressource de signal de référence de suivi, TRS, pour une activation de cellule secondaire, SCell, afin de configurer un TRS pour une activation de SCell en tant que signal de synchronisation temps-fréquence, et
le processeur (11) est configuré pour configurer le TRS pour une activation de SCell en tant que signal de synchronisation temps-fréquence,
la ressource TRS est une ressource TRS apériodique, et
la SCell est activée par un élément de commande, CE, de commande d'accès au support, MAC, et le TRS apériodique est déclenché par un CE MAC,
**caractérisé en ce que** le TRS apériodique est déclenché dans un créneau n1 et le TRS apériodique est détecté, par l'équipement utilisateur, dans un créneau n1 + X, dans lequel X est un décalage configuré par un message de commande de ressources radio, RRC, ou défini par un protocole.

8. Appareil d'équipement utilisateur (10) selon la revendication 7, dans lequel le récepteur (12) est en outre configuré pour détecter le TRS apériodique avec une puissance de transmission qui présente une relation fixe avec une puissance de transmission utilisée pour transmettre un bloc de signal de synchronisation, SSB, dans la même cellule.

9. Appareil d'équipement utilisateur (10) selon la revendication 7 ou 8, dans lequel le récepteur (12) est en outre configuré pour recevoir une indication d'une puissance de transmission du TRS apériodique, dans lequel l'indication comprend une valeur de puissance ou un décalage de puissance par rapport à une transmission d'un SSB dans la même cellule.

10. Appareil de station de base (20) comprenant un transmetteur (21), dans lequel le transmetteur (21) est configuré pour envoyer un message, à un équipement utilisateur (10), configurant une ressource de signal de référence de suivi, TRS, pour une activation de cellule secondaire, SCell, afin de configurer un TRS pour une activation de SCell en tant que signal de synchronisation temps-fréquence, dans lequel la ressource TRS est une ressource TRS apériodique, et dans lequel la SCell est activée par un élément de commande, CE, de commande d'accès au support, MAC, et le TRS apériodique est déclenché par un CE MAC,
**caractérisé en ce que** le TRS apériodique est déclenché dans un créneau n1 et le TRS apériodique est transmis, par la station de base, dans un créneau n1 + X, dans lequel X est un décalage configuré par un message de commande de ressources radio, RRC, ou défini par un protocole.

11. Appareil de station de base (20) selon la revendication 10, dans lequel le transmetteur (21) est en outre configuré pour transmettre le TRS apériodique avec une puissance de transmission qui présente une relation fixe avec une puissance de transmission utilisée pour transmettre un bloc de signal de synchronisation, SSB, dans la même cellule, et/ou
dans lequel le transmetteur (21) est en outre configuré pour indiquer une puissance de transmission du TRS apériodique, dans lequel l'indication comprend une valeur de puissance ou un décalage de puissance par rapport à une transmission d'un SSB dans la même cellule.
